# EUROPEAN PATENT APPLICATION

(11) **EP 3 386 115 A1**
(43) Date of publication of application: **10.10.2018**
(21) Application number: 18164749.6
(22) Date of filing: 28.03.2018
(51) Int. Cl.: H04B 7/15, H04B 7/155

(54) **RELAY APPARATUS AND METHOD OF SUPPRESSING INTERFERENCE**

(30) Priority: 07.04.2017 JP 2017076656
(71) Applicant: FUJITSU LIMITED, Kanagawa 211-8588 (JP)
(72) Inventor: ABE, Shimpei, Kawasaki-shi,, Kanagawa 211-8588 (JP); NAKAZAWA, Hitoshi, Kawasaki-shi, Kanagawa 211-8588 (JP)
(74) Representative: Haseltine Lake LLP

(57) **Abstract**

An apparatus for relaying wireless communications between a first apparatus and a second apparatus includes: a transmitter to amplify power of a first signal and transmit of the first signal to the first apparatus; a receiver to receive a mixed signal including a second signal from the second apparatus and the first signal transmitted from the transmitter; and a processor to perform a process for canceling the first signal out of the mixed signal, the process including generating a first cancellation signal having a phase changed from a phase of the first signal to be transmitted, generating a composite signal by combining the first cancellation signal with the mixed signal, extracting a difference between the composite signal and the first signal to be transmitted, generating a second cancellation signal based on the extracted difference, and generating a cancelled signal produced by combining the second cancellation signal with the composite signal.

## Description

### FIELD

The embodiments discussed herein are related to a relay apparatus and a method of suppressing interference.

### BACKGROUND

In recent years, with widespread use of mobile communication terminals using a wireless communication system, the radio resources sometimes become insufficient. Additional installation of a base station apparatus as a countermeasure for the shortage of radio resources involves, for example the cost of installation of optical cables for connecting to a network, or the like in addition to the cost of the base station apparatus itself.

Thus, a relay base station apparatus is provided that wirelessly connects a base station apparatus and a mobile communication terminal, and relays communications between the base station apparatus and the mobile communication terminal. The relay base station apparatus includes an antenna that performs wireless communications with a base station apparatus and an antenna that performs wireless communications with a mobile communication terminal. The relay base station apparatus, for example transmits a signal received from a base station apparatus to a mobile communication terminal using a frequency different from that of the wireless communication with the base station apparatus. A relay base station apparatus does not connect to a network in a wired manner, for example, using an optical cable, or the like, and thus it is possible to install a relay base station apparatus at a lower cost compared with a base station apparatus.

### SUMMARY

### TECHNICAL PROBLEM

A relay base station apparatus includes two antennas, and a signal transmitted from one of the antennas is sometimes received by the other of the antennas. For example, an antenna that receives a signal from a base station apparatus sometimes receives a signal transmitted from the other of the antennas to a terminal apparatus. In this case, the relay base station apparatus regards the signal received from the other of the antennas as a noise component of the signal received from the base station apparatus, and thus the reception quality of the signal from the base station apparatus deteriorates.

According to an embodiment of the present disclosure, there is provided a technique for enabling suppression of deterioration of a reception quality of a signal even if a signal transmitted from one of the antennas is received by the other of the antennas.

### SOLUTION TO PROBLEM

According to an aspect of the invention, a wireless relay apparatus for relaying wireless communications between a first communication apparatus and a second communication apparatus includes: a transmission circuit configured to amplify power of a first signal and transmit of the first signal to the first communication apparatus; a reception circuit configured to receive a mixed signal including a second signal from the second communication apparatus and the first signal transmitted by the transmission circuit; and a processor configured to perform cancellation processing that includes first cancellation processing and second cancellation processing so as to cancel the first signal out of the mixed signal, wherein the first cancellation processing is configured to generate a first cancellation signal having a phase changed from a phase of the first signal after the amplification and before the transmission, and generate a composite signal produced by combining the first cancellation signal with the mixed signal, and the second cancellation processing is configured to extract a difference between the composite signal and the first signal after the amplification and before the transmission, generate a second cancellation signal based on the extracted difference, and generate a cancelled signal produced by combining the second cancellation signal with the composite signal.

The object and advantages of the invention will be realized and attained by means of the elements and combinations particularly pointed out in the claims.

It is to be understood that both the foregoing general description and the following detailed description are exemplary and explanatory and are not restrictive of the invention, as claimed.

### ADVANTAGEOUS EFFECTS OF INVENTION

According to a disclosed embodiment, it is possible to lead to suppression of deterioration of a reception quality of a signal even if a signal transmitted from one of the antennas is received by the other of the antennas.

### BRIEF DESCRIPTION OF DRAWINGS

FIG. 1 is a diagram illustrating an example of the configuration of a wireless communication system;
FIG. 2 is a diagram illustrating an example of the configuration of a relay apparatus;
FIG. 3 is a diagram illustrating an example of the detailed configuration of the relay apparatus;
FIG. 4 is a diagram illustrating an example of the processing flowchart of analog cancellation processing;
FIG. 5 is a diagram illustrating an example the processing flowchart of analog cancellation signal generation processing;
FIG. 6 is a diagram illustrating an example of the processing flowchart of digital cancellation processing;
FIG. 7 is a diagram illustrating an example of the processing flowchart of digital cancellation signal generation processing;
FIG. 8 is a diagram illustrating another example of the configuration of a relay apparatus;
FIG. 9 is a diagram illustrating an example of the processing flowchart of analog cancellation monitoring processing; and
FIG. 10 is a diagram illustrating an example of the processing flowchart of digital cancellation monitoring processing.

### DESCRIPTION OF EMBODIMENTS

### First embodiment

A description will be given of a first embodiment. In the first embodiment, a relay apparatus (relay base station apparatus) wirelessly connects a first communication apparatus (for example, base station apparatus) and a second communication apparatus (for example, terminal apparatus), and relays wireless communications between the first communication apparatus and the second communication apparatus. The relay apparatus includes a transmission unit that amplifies the power of a first signal and transmits the first signal to the first communication apparatus, a reception unit that receives a second signal transmitted by the second communication apparatus and the first signal, and a cancellation unit that performs first cancellation processing for canceling the first signal among the signals received by the reception unit and performs second cancellation processing. The cancellation unit then generates a first cancellation signal having a phase changed from that of the first signal after amplification and before radio transmission in the first cancellation processing, and a composite signal produced by combining the generated first cancellation signal and the signal received by the reception unit. Also, the cancellation unit extracts the difference between the composite signal and the first signal after the amplification and before the transmission in the second cancellation processing, generates a second cancellation signal based on the extracted difference, and generates a signal after the cancellation produced by combining the generated second cancellation signal with the composite signal.

### Example of configuration of wireless communication system

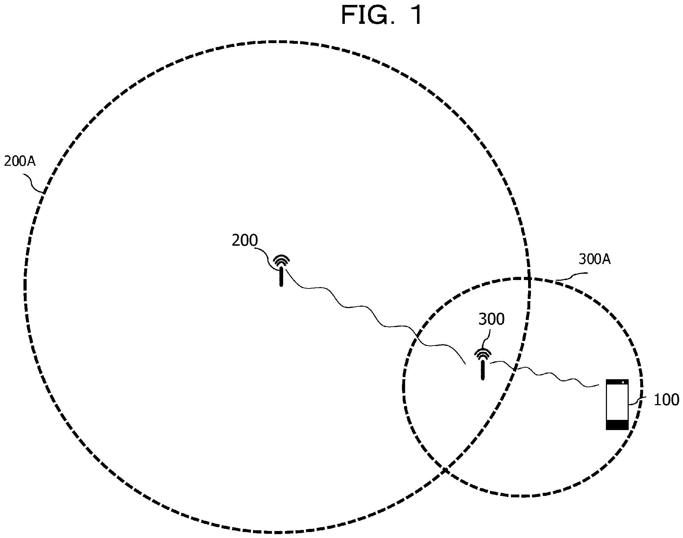

FIG. 1 is a diagram illustrating an example of the configuration of a wireless communication system 10. The wireless communication system 10 includes a terminal apparatus 100, a base station apparatus 200, and a relay apparatus 300. The wireless communication system 10 is, for example a communication system conforming to the Long Term Evolution (LTE) standard.

The terminal apparatus 100 wirelessly connects to the relay apparatus 300 and performs communications with the base station apparatus 200 via the relay apparatus 300. Also, the terminal apparatus 100 may perform communications with the other communication apparatuses (not illustrated in FIG. 1) via the relay apparatus 300 and the base station apparatus 200. The terminal apparatus 100 is an mobile communication apparatus, for example a smartphone, a tablet terminal, or the like.

The base station apparatus 200 wirelessly connects to the relay apparatus 300 and performs communications with the terminal apparatus 100 via the relay apparatus 300. The base station apparatus 200 has a communication area 200A. The communication area 200A is a range in which the base station apparatus 200 is capable of wirelessly connecting with the other communication apparatuses (for example, the terminal apparatus 100 and the relay apparatus 300). The relay apparatus 300 that is located within the range of the communication area 200A is capable of wirelessly connecting to the base station apparatus 200. The base station apparatus 200 is, for example an eNodeB (evolved node B) in a communication system conforming to LTE.

The relay apparatus 300 is an apparatus that relays wireless communications between the terminal apparatus 100 and the base station apparatus 200, and is, for example a relay base station apparatus. The relay apparatus 300 has a communication area 300A. The communication area 300A is a range in which the relay apparatus 300 is capable of performing wireless communication with the terminal apparatus 100. The terminal apparatus 100 that is located within the range of the communication area 300A is capable of wirelessly connecting to the relay apparatus 300. The relay apparatus 300, for example receives a signal from transmitted from the base station apparatus 200 to the terminal apparatus 100, converts the frequency of the received signal, and transmits the signal to the terminal apparatus 100. Also, the relay apparatus 300 receives, for example a signal transmitted from the terminal apparatus 100 to the base station apparatus 200 (or a communication apparatus of the communication party of the terminal apparatus 100), converts the frequency of the received signal, and transmits the signal to the base station apparatus 200. Thereby, the relay apparatus 300 relays wireless communications between the terminal apparatus 100 and the base station apparatus 200.

### Example of configuration of relay apparatus

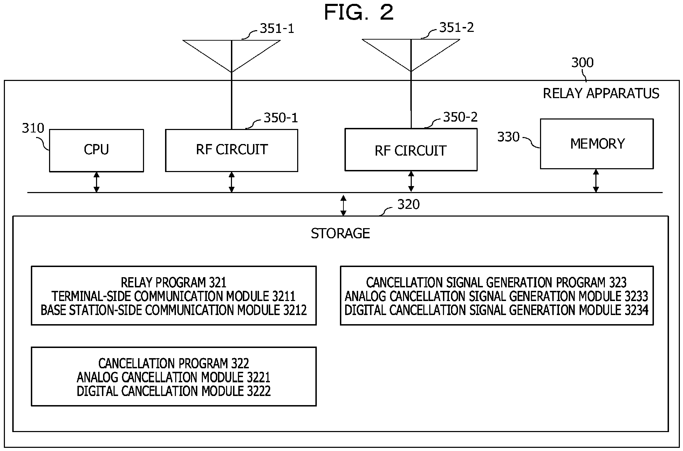

FIG. 2 is a diagram illustrating an example of the configuration of the relay apparatus 300. The relay apparatus 300 includes a central processing unit (CPU) 310, a storage 320, a memory 330, such as a dynamic random access memory (DRAM), or the like, and radio frequency (RF) circuits 350-1 and 350-2.

The storage 320 is an auxiliary storage device, such as a flash memory, a hard disk drive (HDD), a solid state drive (SSD), or the like that stores programs and data. The storage 320 stores a relay program 321, a cancellation program 322, and a cancellation signal generation program 323.

The memory 330 is an area in which the programs stored in the storage 320 are loaded. Also, the memory 330 is used as an area in which the programs store data.

The RF circuits 350-1 and 350-2 (hereinafter sometimes referred to as an RF circuit 350) are apparatuses that performs wireless communications with the terminal apparatus 100 or the base station apparatus 200. For example, the RF circuit 350-1 communicates with the terminal apparatus 100, and the RF circuit 350-2 communicates with the base station apparatus 200. The RF circuit 350 includes the antennas 351-1 and 351-2 individually (hereinafter sometimes referred to as an antenna 351). The RF circuit 350 receives a signal transmitted by the terminal apparatus 100 and the base station apparatus 200 via the antennas 351-1 and 351-2 respectively, and transmits a signal to the terminal apparatus 100 and the base station apparatus 200. For example, the antenna 351-1 is a terminal-side antenna that performs wireless communications with the terminal apparatus 100, and the antenna 351-2 is a base station-side antenna that performs wireless communications with the base station apparatus 200.

The CPU 310 executes the relay program 321 so as to serve as the transmission unit and the reception unit and performs relay processing. The relay processing is processing for relaying communications between the terminal apparatus 100 and the base station apparatus 200. In the relay processing, the relay apparatus 300, for example receives a signal from the terminal apparatus 100, changes the frequency of the received signal, and transmits the signal to the base station apparatus 200. Also, in the relay processing, the relay apparatus 300 amplifies the power of the signal received from the terminal apparatus 100 and adjusts (changes) the phase and the delay of the received signal, and transmits the signal to the base station apparatus 200.

Also, the CPU 310 executes a terminal-side communication module 3211 of the relay program 321 so as to serve as the reception unit and performs terminal-side communication processing. The terminal-side communication processing is processing for transmitting and receiving signals with the terminal apparatus 100. The relay apparatus 300, for example receives a signal from the terminal apparatus 100 and transmits a signal to the terminal apparatus 100 in the terminal-side communication processing.

Further, the CPU 310 executes a base station-side communication module 3212 of the relay program 321 so as to serve the transmission unit and performs the base station-side communication processing. The base station-side communication processing is processing for transmitting and receiving signals with the base station apparatus 200. The relay apparatus 300, for example receives a signal from the base station apparatus 200 and transmits a signal to the base station apparatus 200 in the base station-side communication processing.

The CPU 310 executes the cancellation program 322 so as to serve as the cancellation unit and performs cancellation processing. The cancellation processing is processing for removing or reducing interference waves included in the signal received by the antennas 351-1 and 351-2. The interference waves are signals, for example signals transmitted from the other antenna 351-2 among the signals received by the antenna 351-1. The relay apparatus 300 performs, for example analog cancellation (first cancellation) processing and digital cancellation (second cancellation) processing on the signal received by the terminal-side antenna 351-1 in the cancellation processing.

Also, the CPU 310 executes the analog cancellation module 3221 of the cancellation program 322 so as to perform analog cancellation processing. The analog cancellation processing is processing for canceling interference waves of the reception signal using an analog cancellation signal.

Further, the CPU 310 executes a digital cancellation module 3222 of the cancellation program 322 so as to perform digital cancellation processing. The digital cancellation processing is processing for canceling the interference waves of the reception signal using a digital cancellation signal.

The CPU 310 executes the cancellation signal generation program 323 so as to serve as the cancellation unit and performs cancellation signal generation processing. The cancellation signal generation processing is processing for generating (or regenerating) the analog cancellation signal and the digital cancellation signal.

Also, the CPU 310 executes an analog cancellation signal generation module 3233 of the cancellation signal generation program 323 so as to perform analog cancellation signal generation processing. The analog cancellation signal generation processing for, for example changing the phase, the amplitude, and the delay of the signal before having been transmitted to the wireless section (the signal having the power thereof amplified by the amplifier), and generating the analog cancellation signal. The relay apparatus 300, for example generates an analog cancellation signal having the phase inverted from the phase of the signal before having been transmitted to the wireless section in the analog cancellation signal generation processing.

Further, the CPU 310 executes a digital cancellation signal generation module 3234 of the cancellation signal generation program 323 so as to perform digital cancellation signal generation processing. The digital cancellation signal generation processing is processing for, for example changing the phase, the amplitude, and the delay of the signal before having been transmitted to the wireless section (the signal having the power thereof amplified by the amplifier), and generating a digital cancellation signal. The relay apparatus 300 compares the signal before having been transmitted to the wireless section and the signal received via the antenna, and extracts (detects) the differences of the phase, the amplitude, and the delay in the digital cancellation signal generation processing. It is possible for the relay apparatus 300 to estimate (calculate) variations (also referred to as distortions or the amounts of distortion) of the phase, the amplitude, and the delay of the signal transmitted from the antenna 351 until the reception by the other antenna 351 by extracting the differences. The relay apparatus 300 changes the phase, the amplitude, and the delay of the signal before having been transmitted to the wireless section, and generates the digital cancellation signal based on the extracted differences in the digital cancellation signal generation processing.

In this regard, the digital cancellation signal generation processing and the analog cancellation signal generation processing may be performed, for example at the time of starting operation when the power to the relay apparatus 300 is turned on or at the first time of receiving a signal by the antenna 351. Also, the digital cancellation signal generation processing and the analog cancellation signal generation processing may be performed periodically.

### Signal transmission and reception processing

A description will be given of signal transmission and reception processing in the relay apparatus 300.

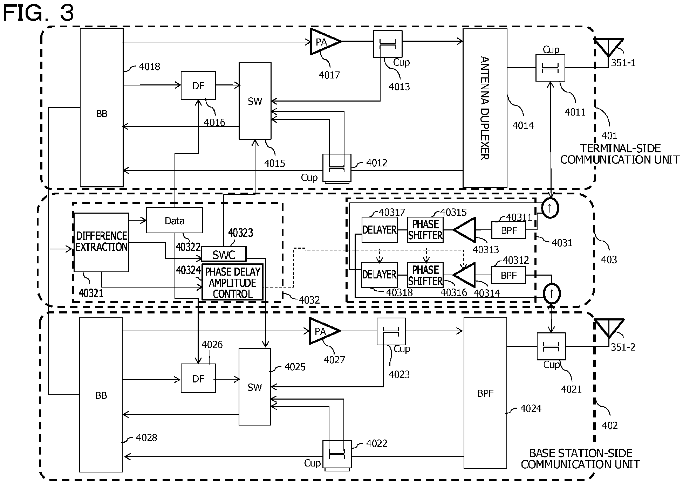

FIG. 3 is a diagram illustrating an example of the detailed configuration of the relay apparatus 300. The relay apparatus 300 includes a terminal-side communication unit 401, a base station-side communication unit 402, and a cancellation unit 403.

The terminal-side communication unit 401 communicates with the terminal apparatus 100 and performs terminal-side communication processing. Also, the terminal-side communication unit 401 includes couplers 4011 to 4013, an antenna duplexer 4014, a switch 4015, a digital filter 4016, a power amplifier 4017, and a baseband processing circuit 4018.

The couplers 4011 to 4013 are devices that combine or separate data (signal). The couplers 4011 to 4013, for example combine a plurality of input signals. Also, the couplers 4011 to 4013, for example output a combined signal to a plurality of paths (devices).

The antenna duplexer 4014 is a device that splits an input signal for each frequency and outputs the signals. The antenna duplexer 4014, for example splits an input signal via the coupler 4011 into specific frequencies (frequency bands) and outputs the signals to the other paths (devices).

The switch 4015 is a device that changes the output destination of an input signal. The relay apparatus 300 controls the switch 4015 so as to change (control) the output destination of the signal.

The digital filter 4016 is a device that extracts a signal of a specific frequency component and outputs the extracted signal.

The power amplifier 4017 is a device that amplifies the received power (amplitude) of the input signal and outputs the amplified signal.

The baseband processing circuit 4018, for example performs modulation processing on the signal to be transmitted by radio, and performs demodulation processing on the signal received via radio waves.

The base station-side communication unit 402 communicates with the base station apparatus 200 and performs base station-side communication processing. Also, the base station-side communication unit 402 includes couplers 4021 to 4023, a band-pass filter 4024, a switch 4025, a digital filter 4026, a power amplifier 4027, and a baseband processing circuit 4028. The couplers 4021 to 4023, the switch 4025, the digital filter 4026, the power amplifier 4027, and the baseband processing circuit 4028 are the same as the couplers 4011 to 4013, the switch 4015, the digital filter 4016, the power amplifier 4017, and the baseband processing circuit 4018 respectively.

The band-pass filter 4024 is a device that generates a signal including only the component of a specific frequency band of the input signal and outputs a generated signal.

The cancellation unit 403 performs analog cancellation processing and digital cancellation processing. Also, the cancellation unit 403 includes an analog cancellation unit 4031 and a digital cancellation unit 4032.

The analog cancellation unit 4031 includes band-pass filters 40311 and 40312, amplifiers 40313 and 40314, phase shifters 40315 and 40316, and delayers 40317 and 40318. The band-pass filters 40311 and 40312 are the same devices as the band-pass filter 4024.

The amplifiers 40313 and 40314 are devices that amplify the amplitude of an input signal and outputs the amplified signal.

The phase shifters 40315 and 40316 are devices that convert the phase of an input signal and outputs the converted signal.

The delayers 40317 and 40318 are devices that converts the delay of an input signal and outputs the changed signal.

The digital cancellation unit 4032 includes a difference extraction unit 40321, a data unit 40322, a switch control unit 40323, and a phase delay amplitude control unit 40324.

The difference extraction unit 40321 extracts the difference in delay, phase, and amplitude between the two input signals. The two input signals are, for example, the signal received by the terminal-side communication unit and the signal that is not yet transmitted by the base station-side communication unit and has power amplified by the power amplifier 4027.

The data unit 40322 generates a digital cancellation signal based on the difference extracted by difference extraction unit 40321. Also, when the difference extraction unit 40321 generates the digital cancellation signal, the data unit 40322 manages (stores) the generated digital cancellation signal.

In this regard, each device illustrated in FIG. 3 may be realized, for example by a processor, such as a CPU, or the like executing a specific program.

In the following, a description will be sometimes given of an example of each processing in the signal transmission and reception processing in the relay apparatus 300 using FIG. 3. In this regard, in the first embodiment, a description will be given of the case where a signal transmitted from the base station-side antenna 351-2 is received by the terminal-side antenna 351-1. However, a signal transmitted from the terminal-side antenna 351-1 may be received by the base station-side antenna 351-2. In the following, a description will be given of the case where cancellation processing is performed on a reception signal of the terminal-side communication unit 401. However, the base station-side communication unit 402 may perform the same processing as that of the terminal-side communication unit 401.

The relay apparatus 300 transmits a signal (hereinafter sometimes referred to as a first signal) via the antenna 351-2 of the base station-side communication unit 402 to the base station apparatus 200. The antenna 351-1 of the terminal-side communication unit 401 receives the first signal transmitted to the base station apparatus 200. The first signal is a signal transmitted to the base station apparatus 200, and thus the first signal received by the antenna 351-1 becomes noise (interference wave) on the signal from the terminal apparatus 100, which ought to be received by the antenna 351-1. Thus, the relay apparatus 300 performs cancellation (counteraction) processing on the first signal received by the antenna 351-1. The relay apparatus 300 performs analog cancellation processing S100 and digital cancellation processing S200.

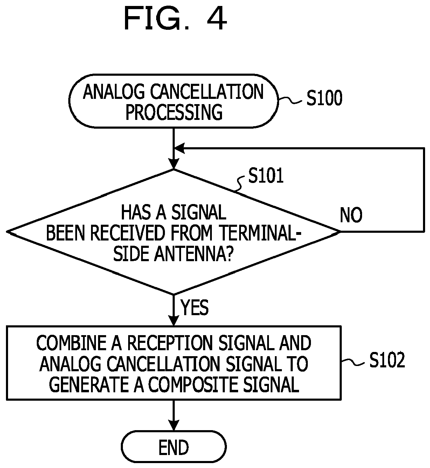

FIG. 4 is a diagram illustrating an example of a processing flowchart of the analog cancellation processing S100. The relay apparatus 300 waits for reception of a signal from the terminal-side antenna 351-1 (No in S101). When the relay apparatus 300 receives a signal from the terminal-side antenna 351-1 (Yes in S101), the relay apparatus 300 combines the reception signal and the analog cancellation signal to generate a composite signal (S102). A description will be given later of the analog cancellation signal generation processing. The terminal-side communication unit 401 combines, for example the reception signal by the antenna 351-1 and the analog cancellation signal obtained from the analog cancellation unit 4031 using the coupler 4011.

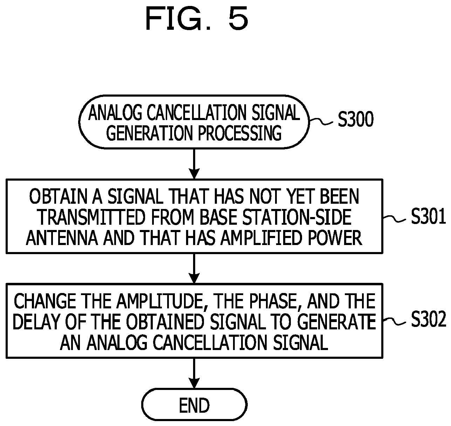

FIG. 5 is a diagram illustrating an example of a processing flowchart of the analog cancellation signal generation processing S300. The relay apparatus 300 obtains a signal that is not yet transmitted from the base station-side antenna and has the amplified power (amplitude) (hereinafter sometimes referred to as a pre-transmission signal) (S301). The analog cancellation unit 4031 obtains the pre-transmission signal, which is amplified and not yet transmitted, for example via the coupler 4021.

The relay apparatus 300 changes the amplitude, the phase, and the delay of the obtained pre-transmission signal, and generates an analog cancellation signal (S302). The analog cancellation unit 4031 removes a frequency component that is noise from the obtained pre-transmission signal using, for example the band-pass filter 40312, and generate an analog cancellation signal having the amplitude, the phase, the delay changed by the amplifier 40114, the phase shifter 40316, and the delayer 40318 respectively.

The analog cancellation signal is, for example a signal having the phase inverted from the phase of the pre-transmission signal. Also, the analog cancellation signal may be subjected to changes of delay and amplitude in addition to the inversion of the phase, for example in consideration of a decrease in amplitude due to power attenuation of the signal by the transmission in the wireless section and an increase in delay due to time from transmission of the signal to the wireless section until the reception.

The relay apparatus 300, for example combines the analog cancellation signal having the inverted phase and the reception signal so as to cancel the interference wave due to the noise component in the analog cancellation processing S100. However, the reception signal sometimes has a phase, an amplitude, and a delay that are different from those of the pre-transmission signal because it takes time from the transmission from the base station-side antenna to the reception by the terminal-side antenna, or the power decreases in the wireless section. The differences in phase, delay, and amplitude between the reception signal and the pre-transmission signal occurs in accordance with a distortion (or the amount of distortion) in the wireless section. In the analog cancellation processing, the estimated amount of distortion, which is not in consideration of the distortion in the wireless section or which is not an actual measurement value, is used, and thus it is not possible to cancel an actual noise component due to the amount of distortion in the wireless section. Thus, in the first embodiment, the relay apparatus 300 performs digital cancellation processing in consideration of the amount of distortion based on a measured value.

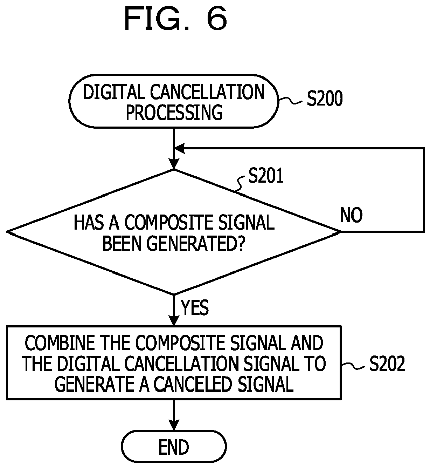

FIG. 6 is a diagram illustrating an example of the processing flowchart of the digital cancellation processing S200. The relay apparatus 300 waits for generation of a composite signal (No in S201). The composite signal is a signal generated in the processing S102 in the analog cancellation processing S100 described above.

When a composite signal is generated (Yes in S201), the relay apparatus 300 combines the composite signal and the digital cancellation signal to generate a signal after the cancellation (S202). The signal after the cancellation is a signal that has been subjected to both the analog cancellation processing and the digital cancellation processing and is a signal to be transmitted to the base station apparatus 200.

The terminal-side communication unit 401 passes, for example the signal received from the antenna 351-1 to the base station-side communication unit 402 via the coupler 4011, the antenna duplexer 4014, the coupler 4012, the switch 4015, and the baseband processing circuit 4018. In this regard, the signal received from the antenna 351-1 is combined with the analog cancellation signal by the coupler 4011 to be produced as a composite signal.

The base station-side communication unit 402 transmits, for example the composite signal via the baseband processing circuit 4028 to the coupler 4022 via the switch 4025, and the coupler 4022 combines the composite signal with the digital cancellation signal. A description will be given later of the digital composite signal generation processing.

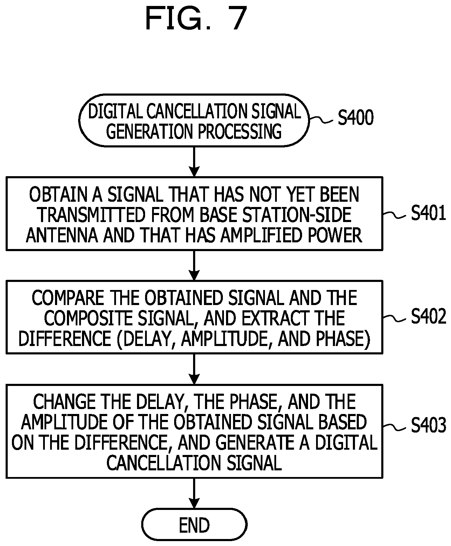

FIG. 7 is a diagram illustrating an example of the processing flowchart of digital cancellation signal generation processing S400. The relay apparatus 300 obtains the power amplified signal before having been transmitted from the base station-side antenna (pre-transmission signal) (S401). The relay apparatus 300 compares the pre-transmission signal and the composite signal, and extracts the differences (in delay, amplitude, and phase) of the signals. The difference to be extracted is, for example the amount of distortion of the signal transmitted from the base station-side antenna until reception by the terminal-side antenna. The relay apparatus 300 then changes the phase, the amplitude, and the delay of the pre-transmission signal based on the extracted difference (or based on the amount of distortion calculated based on the extracted difference) to generate the digital cancellation signal (S403).

In the digital cancellation unit 4032, the difference extraction unit 40321 compares the pre-transmission signal and the composite signal, and extracts the difference. The phase delay amplitude control unit 40324 generates a digital cancellation signal based on the extracted difference and passes the signal to the data unit 40322. In this regard, the digital cancellation signal may be generated by the data unit 40322 controlling the phase delay amplitude control unit 40324. Also, the phase delay amplitude control unit 40324 may change the delay, the phase, and the amplitude using the delayer 40317, the phase shifter 40315, and the amplifier 40313 of the analog cancellation unit 4031.

Thereby, it is possible for the relay apparatus 300 to cancel noise caused by the amount of distortion that has not been possible to be canceled by the analog cancellation processing.

### Second embodiment

Next, a description will be given of a second embodiment. In the first embodiment, generation timings of the analog cancellation signal and the digital cancellation signal are not identified. That is to say, in the first embodiment, an analog cancellation signal and a digital cancellation signal may be newly generated every time a signal is received, or the generated analog cancellation signal and digital cancellation signal may not be regenerated every time. If the relay apparatus 300 generates an analog cancellation signal and a digital cancellation signal every time a signal is received, the processing load becomes high. On the other hand, if the relay apparatus 300 does not regenerate an analog cancellation signal and a digital cancellation signal and continue to use the same signals, the cancellation signals do not correspond to a change of the state of the wireless section. Thus, in the second embodiment, in order to determine whether or not the analog cancellation signal and the digital cancellation signal are suitable signals in accordance with the state of the wireless section, the quality of the signal after the cancellation or the composite signal is monitored. If a determination is made that the analog cancellation signal and the digital cancellation signal are not suitable for the state of the wireless section, an analog cancellation signal and a digital cancellation signal are regenerated.

### Example of configuration of relay apparatus

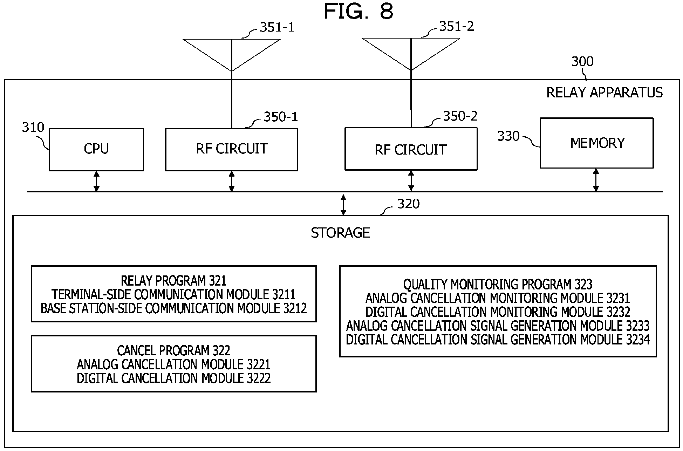

FIG. 8 is a diagram illustrating another example of the configuration of a relay apparatus 300. In the relay apparatus 300, the cancellation signal generation program 323 stored in the storage 320 further includes an analog cancellation monitoring module 3231 and a digital cancellation monitoring module 3232.

The CPU 310 executes the analog cancellation monitoring module 3231 of the cancellation signal generation program 323 so as to serve as a first monitoring unit to perform analog cancellation monitoring processing. The analog cancellation monitoring processing is processing for, for example measuring the received power of the signal (composite signal) after the analog cancellation processing, and performing the analog cancellation signal generation processing if the received power is smaller than allowable reception power that is allowed by the relay apparatus 300. The received power is, for example Reference Signal Received Quality (RSRQ) and Received Signal Strength Indicator (RSSI) in Frequency Division Duplex (FDD). Also, for example in the case of Time Division Duplex (TDD), the relay apparatus 300 may use a guard time in signal transmission, or the accuracy for the guard time (the accuracy indicating how accurately reception is performed with respect to the defined guard time) in place of the received power.

Also, the CPU 310 performs the digital cancellation monitoring module 3232 of the cancellation signal generation program 323 so as to serve as a second monitoring unit to perform digital cancellation monitoring processing. The digital cancellation monitoring processing is processing for, for example measuring an error rate (error occurrence rate) indicating how often an error occurs on the signal after the digital cancellation processing (signal after the cancellation), and if the measured error rate is higher than the allowable error rate of the relay apparatus 300, performing the digital cancellation signal generation processing. The error rate is, for example, a bit error rate (BER) or a signal-to-noise ratio (SNR).

### Analog cancellation monitoring processing

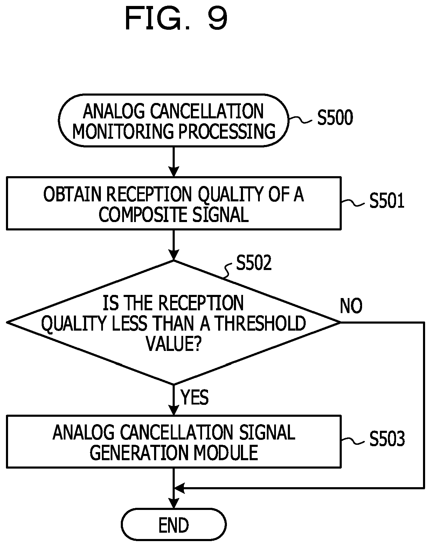

FIG. 9 is a diagram illustrating an example of the processing flowchart of analog cancellation monitoring processing S500. The relay apparatus 300 monitors whether or not the analog cancellation signal is suitable. The relay apparatus 300 obtains the reception quality of the composite signal (S501). If the reception quality is less than a threshold value (Yes in S502), the relay apparatus 300 determines that the reception quality is poor, and the analog cancellation signal is not suitable for the state of the wireless section. Thus, the relay apparatus 300 performs the analog cancellation signal generation processing (S503). On the other hand, if the reception quality is equal to or higher than the threshold value (No in S502), the relay apparatus 300 determines that the reception quality is satisfactory, and the analog cancellation signal is suitable for the state of the wireless section. Accordingly, the relay apparatus 300 continues to use the analog cancellation signal that is currently used.

### Digital cancellation monitoring processing

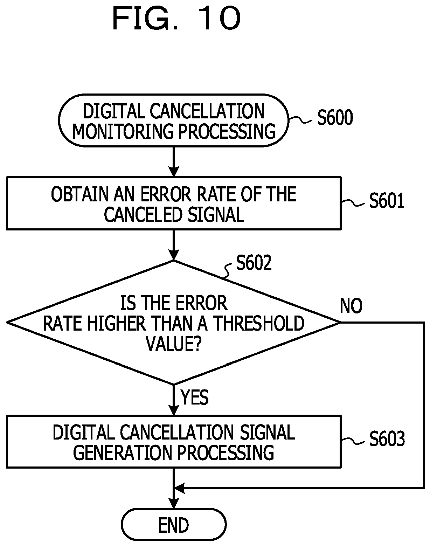

FIG. 10 is a diagram illustrating an example of the processing flowchart of digital cancellation monitoring processing S600. The relay apparatus 300 monitors whether or not the digital cancellation signal is suitable. The relay apparatus 300 obtains the error rate of the signal after the cancellation (S601). If the error rate is higher than a threshold value (Yes in S602), the relay apparatus 300 determines that the error rate is high, and that the digital cancellation signal is not suitable for the state of the wireless section. Thus the relay apparatus 300 performs the digital cancellation signal generation processing (S603). On the other hand, if the error rate is less than or equal to the threshold value (No in S602), the relay apparatus 300 determines that the error rate is low, and the digital cancellation signal is suitable for the state of the wireless section. Thus the relay apparatus 300 continues to use the digital cancellation signal that is currently used.

In the second embodiment, whether or not the analog cancellation signal and the digital cancellation signal are suitable is monitored. When the state of the wireless section changes, and the analog cancellation signal and the digital cancellation signal become unsuitable, the respective cancellation signals are regenerated. Thereby, it is possible for the relay apparatus 300 to perform cancellation processing using suitable cancellation signals in accordance with the state of the wireless section while suppressing an increase in the processing load by generating the cancellation signals.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

### Reference Signs List

300 RELAY APPARATUS
320 STORAGE
321 RELAY PROGRAM
3211 TERMINAL-SIDE COMMUNICATION MODULE
3212 BASE STATION-SIDE COMMUNICATION MODULE
322 CANCELLATION PROGRAM
3221 ANALOG CANCELLATION MODULE
3222 DIGITAL CANCELLATION MODULE
323 CANCELLATION SIGNAL GENERATION PROGRAM
3233 ANALOG CANCELLATION SIGNAL GENERATION MODULE
3234 DIGITAL CANCELLATION SIGNAL GENERATION MODULE
330 MEMORY
350-1, 350-2 RF CIRCUIT
401 TERMINAL-SIDE COMMUNICATION UNIT
4014 ANTENNA DUPLEXER
40315, 40316 PHASE SHIFTER
40317, 40318 DELAYER
402 BASE STATION-SIDE COMMUNICATION UNIT
40321 DIFFERENCE EXTRACTION
40324 PHASE DELAY AMPLITUDE CONTROL

### Citation List

### Patent Literature

Japanese Laid-open Patent Publication No. 2007-180597

## Claims

1. A wireless relay apparatus for relaying wireless communications between a first communication apparatus and a second communication apparatus, the wireless relay apparatus comprising:
a transmission circuit configured to amplify power of a first signal and transmit of the first signal to the first communication apparatus;
a reception circuit configured to receive a mixed signal including a second signal from the second communication apparatus and the first signal transmitted by the transmission circuit; and
a processor configured to perform cancellation processing that includes first cancellation processing and second cancellation processing so as to cancel the first signal out of the mixed signal,
wherein the first cancellation processing is configured to generate a first cancellation signal having a phase changed from a phase of the first signal after the amplification and before the transmission, and generate a composite signal produced by combining the first cancellation signal with the mixed signal, and
the second cancellation processing is configured to extract a difference between the composite signal and the first signal after the amplification and before the transmission, generate a second cancellation signal based on the extracted difference, and generate a cancelled signal produced by combining the second cancellation signal with the composite signal.

2. The wireless relay apparatus according to claim 1,
wherein the first cancellation processing is further configured to invert the phase of the first signal after the amplification and before the transmission so as to generate the first cancellation signal.

3. The wireless relay apparatus according to claim 1 or claim 2,
wherein the first cancellation processing is further configured to change an amplitude and a delay of the first signal after the amplification and before the transmission so as to generate the first cancellation signal.

4. The wireless relay apparatus according to any of the preceding claims,
wherein the second cancellation processing is further configured to extract the difference based on a difference in an amplitude, a phase, and a delay between the first signal after the amplification and before the transmission, and the mixed signal.

5. The wireless relay apparatus according to any of the preceding claims,
wherein the second cancellation processing is further configured to calculate a distortion in a wireless section from transmission of the first signal by the transmission circuit until reception by the reception circuit based on the extracted difference, and generate the second cancellation signal in accordance with the calculated distortion.

6. The wireless relay apparatus according to any of the preceding claims,
wherein the processor is further configured to execute first monitoring processing that includes measuring a value of reception quality of the composite signal, and if the value of the reception quality is lower than a predetermined value, regenerating the first cancellation signal.

7. The wireless relay apparatus according to claim 6,
wherein the value of the reception quality is Reference Signal Received Quality that indicates a quality of the composite signal.

8. The wireless relay apparatus according to claim 6 or claim 7,
wherein the value of the reception quality is Received Signal Strength Indicator that indicates an intensity of received power of the composite signal.

9. The wireless relay apparatus according to any of the preceding claims,
wherein the processor is further configured to execute second monitoring processing that includes measuring a value of an error occurrence rate of the signal after the cancellation, and if the value of the error occurrence rate is higher than a predetermined value, regenerating the second cancellation signal.

10. The wireless relay apparatus according to claim 9,
wherein the value of the error occurrence rate is a bit error ratio that indicates a rate of errors in the cancellation signal.

11. The wireless relay apparatus according to claim 9 or claim 10,
wherein the value of the error occurrence rate is a signal to noise ratio that indicates a signal to noise ratio of the cancellation signal.

12. The wireless relay apparatus according to any of the preceding claims,
wherein a frequency of the first signal is a first frequency and a frequency of the second signal is a frequency different from the first frequency.

13. A method performed by a wireless relay apparatus for relaying wireless communications between a first communication apparatus and a second communication apparatus, the wireless relay apparatus including: a transmission circuit configured to amplify power of a first signal and transmit of the first signal to the first communication apparatus; and a reception circuit configured to receive a mixed signal including a second signal from the second communication apparatus and the first signal transmitted by the transmission circuit, the method comprising:
receiving the mixed signal from the reception circuit; and
performing cancellation processing that includes first cancellation processing and second cancellation processing so as to cancel the first signal out of the mixed signal,
wherein the first cancellation processing generates a first cancellation signal having a phase changed from a phase of the first signal after the amplification and before the transmission, and generates a composite signal produced by combining the first cancellation signal with the mixed signal, and
the second cancellation processing extracts a difference between the composite signal and the first signal after the amplification and before the transmission, generates a second cancellation signal based on the extracted difference, and generates a cancelled signal produced by combining the second cancellation signal with the composite signal.
